Europäisches Patentamt

European Patent Office

Office européen des brevets

(11) Publication number: **0 539 632 A1**

## EUROPEAN PATENT APPLICATION

(21) Application number: **91309951.1**

(22) Date of filing: **29.10.91**

(51) Int. Cl.⁵: **B23Q 15/24**, G05B 19/407

(43) Date of publication of application:
**05.05.93 Bulletin 93/18**

(84) Designated Contracting States:
**AT BE CH DE DK ES FR GB GR IT LI LU NL SE**

(71) Applicant: **Yang, Tai-Her**
**Giant Lion Know-how Company, P.O. Box 84-85**
**Taipei(TW)**

(72) Inventor: **Yang, Tai-Her**
**Giant Lion Know-how Company, P.O. Box 84-85**
**Taipei(TW)**

(74) Representative: **Arthur, Bryan Edward et al**
**4 Dyers Buildings Holborn**
**London, EC1N 2JT (GB)**

(54) **Inertial residual buffer positioning or forward/backward rotation controlled circuit system.**

(57) An inertial residual buffer positioning system including a power source, a driven object (102) a transmission structure (103), a preset position sensor (108), an auxiliary preset timer (105), a final position sensor (109), a control unit (106) and a manual control (107).

Power is applied until a preset position is detected by the senor (108) or the timer (105) timing out. The driven object is then returned to its final position which is detected by sensor (109), by a fixed position brake or a direct rotating backward power source. the system achieves improved positioning accuracy and minimizes instantaneous brake impact.

EP 0 539 632 A1

BACKGROUND OF THE INVENTION

This refers a kind of newly designed position controlling method. The characteristics of this system are as follows:
- It features a driven object which is driven to a fixed position by means of inertial residual buffer enervation after switching off power source at a prefixed position.

And then,the object has been braked and backwards rotated to its home position in order to eliminate impact of positioning and upgrade positioning accuracy.

SUMMARY OF THE INVENTION

The present design refers a kind of inertial residual buffer positioning or forward/backward rotation control system. the main features are as follows:
- It composes of a motor power source and a device of transmission structure,and also inertial residual buffer driving after switching off power source;
- A device with a preset sensor in an auxiliary fixed position prior to the present final position according to the driving speed or a preset auxiliary time setting device adjustable within desired duration of time in reaching the preset final position.; – A preset power source which can be switched off by a switch or a mechanical device for suspending power input to the driven object in reaching its preset auxiliary position or within auxiliary preset duration of time to stop the object under inertial enervating drive;
- A final position sensor of sensing the signal from driven object toward its final position by a fixed position brake or direct backward rotating power source in order to brake the driven object after contacting its home position sensor in returning to its home position;
- A main controlling unit is for installing a controlling switch and an auxiliary circuit and manual controlling device. Thus, this method can upgrade positioning accuracy and minimize instantaneous braking impact, and it needs not to apply controllable power source, i.e, a servo motor or varying speed wound rotor type motor. It is low cost and suitable for steady load driving for drilling and work – station driving especially for applying a sensor driving clutch to sense uncontrollable power source to detach the power source and driven object by means of inertial enervating drive to a fixed position, and then apply a brake or clutch directly to switch and arrange backward driving wheel system for the driven object to return backwards to its home position.

BRIEF DESCRIPTION OF THE DRAWINGS

Fig. 1 is a descriptive drawing of circuit block system of this inertial residual buffer positioning or forward/backward rotation controlling system.
Fig. 2 is a drawing of operational property of Fig. 1.
Fig. 3 is a descriptive drawing of circuit block applied clutch controlled power source.

DETAILED DESCRIPTION OF THE INVENTION

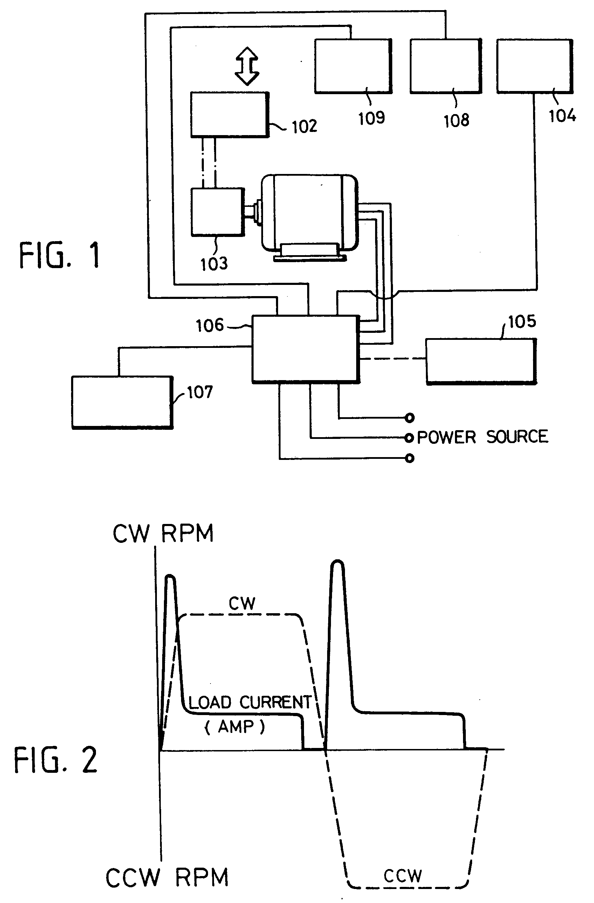

As described in Fig. 1, the present design is related to kind of inertial residual buffer positioning or forward/ackward rotation controlled circuit system. Its main features are as follows:
- A mechanical components are composed of motor power source 101, a driven object 102 and transmission structure 103. It features inertial enervating drive after switching off power supply;
- Prior to reach the final position, there is a preset sensor 108 at auxiliary preset fixed point, or an auxiliary preset timer 105 within the duration of time upon reaching final preset point according to the driving speed;
- Power source initiates to drive the driven object to the auxiliary preset point or cuts off power input to the driven object by an electric switch or mechanical device within the preset duration of time to stop the object by inertial residual drive;
- The final positioning sensor 109 can sense the signal from the fixed point upon arrival of the driven object, and then make the driven object to return to its final position by a fixed position brake or direct backward rotating power source in order to brake the driven object after contacting the home position sensor in returning to its home position;
- A main controlling unit 106 is for installing a controlling switch and an auxiliary logic circuit and manual controlling device 107; The operation process are shown in Table 1, and its operational property is shown in Fig. 2 as stated above.

This method can upgrade positioning accuracy and minimize instantaneous brake impact, and it needs not apply traditional slow down driving method and also needs not apply the devices of controlling power source, i.e, servo motor or varying speed wound rotor type motor. It is low cost and suitable to comparatively steady load such as drilling, tapping and work – station driving, especially for uncontrollable power source which can be sense by the sensor in an auxiliary positioning sensor. It also can detach power source and the driven object by means of inertial enervating drive to its fixed position, and make the driven object to return to its home position by means of driving brake or direct switching to backward driving wheel system in the clutch. Based on the above mentioned principle of design, this kind circuit system is composed of: (A) It can apply to repeated fabrication by means of forward/ backward rotation which is driven by power source, such as, tap – ping threads.

  – A power motor and a transmission structure: It can rotate forward by an AC single or three phase motor or a DC motor;
  – A device can adjust fixed ratio feed according to the numbers of rotation of the main axis, and also it is featured property of inertial residual drive after switching off power supply;
  – A auxiliary preset device; It can preset fixed or adjustable distance to a fixed position for sensing the driven object to reach the position, and then switch off power supply for making the driven object to glide by inertia.

The above – mentioned auxiliary switch can be substituted by a retrievable timer which is synchronized with power source starter. This kind of timer can adjust time setting for earlier cutting off power supply prior to the driven object has reached to preset position;

  – Final positioning device: It can initiate power source for backward rotation to return to its home position by means of sensing loaded object driven to a fixed position, (or initiating brake for backward driving after braking);
  – Original position setting device: It can offer the driven object to return to original position and make it under waiting state for initiating again;
  – Controlling unit: It is composed of electric, electronics controlling switches or microprocessors.

This system can operated sequentially in the order of power input and initiation of power motor by receiving the signal from auxiliary preset device to cut off power supply for inertial residual driving. And then, it also receives the signal form final positioning device for initiating power source for backward rotation of the driven object to return to its home position (or applying brake firstly, and initiating power source for backward rotation) for returning to original position under waiting state.

This kind of application can also be arranged a auxiliary brake inside or electric brake circuit which can be acted when the object has reached to fixed position. After applying brake, the object can be returned to original position.

This kind of design is superior to the traditional backward rotation driven by power motor. The merits are as follows:

1. The accuracy of fixing position has been upgraded.
2. No overheating of motor.
3. The life spun of forward/backward rotation switch is prolonged.
4. Less mechanical impact.

Furthermore, it has merits in comparing with that of servo motor controlled positioning method as follows:

1. Lower cost with the same accuracy.
2. No overheating of motor.

(B) By applying forward/backward rotating power source for single – axis or multi – axis formula posi – tioning drive, i.e., multi – points positioning control, it it composed of:

  – Driving motor and driving structure: A DC or AC forward/backward rotating motor is featured inertial residual drive after cutting off power supply;
  – An auxiliary preset device: It can adjust the distance to the fixed point for sensing the driven object which has reached to the fixed point, and then it cuts off power supply for making the driven object to glide by inertia residual drive;
  – Final positioning device: It senses and bakes the loaded object which is driven to the fixed position;
  – Original point setting device: It is under wait state for the driven object to return to original point;
  – Controlling unit: It is composed of electric or electronic elements or a microprocessor.

The operational sequence of this system is power input, to initiate driving motor toward preset direction, to receive the signal from the auxiliary preset device for cutting off motor power supply in order to make the object glide by inertial residual drive to the final position, to contact the final positioning sensor by sensing the signal from the final positioning device for braking, and then to initiate the driving motor to rotate according to new direction as indicated.

Thus, this new method is superior to the traditional controlling system:

1. Lower cost.

2. The accuracy of positioning is same.

3. No overheating in the motor.

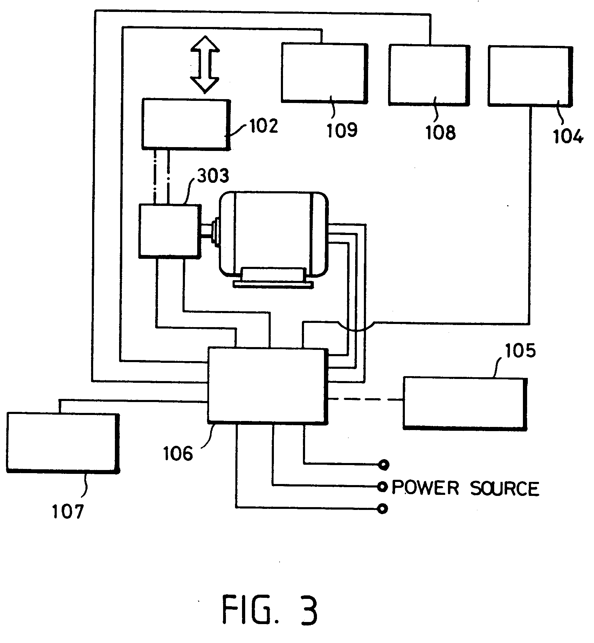

In the above–mentioned practice,if the original power source is unsuitable for forward/backward rotation or larger motors, we may, according to Fig. 3, apply the clutch in transmission system to link backward driving wheel system 303 to cut off power supply by means of auxiliary sensor (or timer setting value), transmit power load to the loaded object to glide toward the fixed point by inertial residual drive for contacting the final positioning sen–sor to apply brake or by shifting clutch to backward driving wheel system for driving the loaded driven object to rotate backward to return to its home position.

As to the structures of clutch and backward rotation device are commonly known. However, there is no need to mention them.

To sum up, this kind of inertial residual buffer positioning or forward/backward rotation controlling circuit system can increase the accuracy of forward/backward driving device, lessen the numbers of elements, and eliminate running hot of motor. The practice is innovative and its function is effective. However, I would request your honor to investigate this application according to the laws and regulations concerned, thanks.

**Claims**

1. A kind of inertial residual buffer positioning or forward/backward rotation controlled circuit system. Its main features are:
   - Its mechanical structure is composed of motor power source, a driven object and a transmission, and featured inertial enervating drive after cutting off power supply;
   - It is equipped with a sensor in auxiliary preset point before the final position or an auxiliary preset timer for setting the duration of time for the driven object to reach the final position;
   - After driving the driven object to the auxiliary preset point or in the time preset by auxiliary timer, the power supply will be cut off by electric switch or mechanical method to stop the driven object under inertial enervation;
   - The final positioning sensor is for sensing the signal from the driven object for applying fixed point brake or direct backward rotating power source to make the driven object to return to its home position by contacting original point sensor;
   - It can install a controlling switch and am main controlling unit with auxiliary logic circuit and a manual controlling device.

2. As stated in Item 1 of Claims, inertial residual positioning or forward/backward rotating controlling circuit system is capable to make repeated fabrication of forward/backward rotation power driven action. It is composed of:
   - A power motor and transmission device: It may be of forward rotation single or three phase AC motor or DC motor;
   - According to the number of rotation of the main axis, it can adjust the direction of rotation, or fix the ratio of feeding,and
     it is also featured inertial residual drive after cutting off power supply;
   - An auxiliary preset device: It can fix or adjust the distance toward the fixed point for sensing the driven object which has reached to the point, and then cut off power supply for the driven object to glide by inertia;
     The abovementioned auxiliary switch may be substituted with a retrievable timer which is synchronized with power source starter. This timer can adjust the duration of time by preset for the driven object has reached the fixed point;
   - The final positioning device: It can sense the loaded driven object in the fixed time for initiate the power source retrievable to its original point (or to initiate bake for backward rotation after brake has been applied); 15– Original point preset device: It offers the driven object to return to original point under wait state;
   - Controlling unit: It is composed of the elements of electric, electronics controlling switch or microprocessor. The operational sequence of this system is power input, to initiate power motor, to receive the signal from auxiliary preset device to cut off power supply, to receive the signal from final positioning device by means of inertial residual drive for driving power to rotate backward for retrieval drive (or to initiate brake for backward rotation after brake has been applied), and then to return to original point under wait state;

In this kind of practice, it may preset an auxiliary brake or electric circuit brake at the fixed point when the driven object has reached, and then it can drive backward for retrieving to original point after brake has been applied.

3. As stated in the Item 1 of Claims, the inertial residual buffer positioning or forward/backward rotation controlling circuit system is featured single − axis or multi − axis formula positioning driven multi − point control.

It is composed of:
 − A Driving motor and driving structure: It can be of AC or DC motor which can rotate forward and backward, and also is featured inertial residual drive;
 − An auxiliary preset device: It is for fixing or adjusting the distance to the fixed point for sensing whether the driven object has reached to the point, and then cut power supply for the object to glide by inertia;
 − The final positioning device: It is for sensing the loaded object for braking after the driven object has reached the fixed point;
 − Original preset device: It offers the driven object to return to original point under wait state;
 − Controlling unit: It is composed of electric and electronics switch elements or a microprocessor;
 The operational sequence of this system is power input, to operate the driving motors toward indication direction for driving, and then to receive the signal from the auxiliary preset device for cutting off power supply, to glide the driven object to the final position by means of inertial residual drive, to contact final position sensor for inertial brake and then indicate new direction to initiate the driving motors after braked has been applied.

4. As stated in the Item 1 of Claims, when inertial residual buffer position or forward/backward rotation controlling circuit system is unsuitable for forward/backward rotation power source or for larger motor, it may apply a traditional clutch by shifting the clutch to backward driving wheel system. During operation, it senses by means of auxiliary positioning device (or timer setting value) to cut off power source and loaded power transmission to make the driven object glide toward the fixed point by inertia. It also contacts the final position sensor to initiate brake or to shift the clutch to backward driving wheel system for the loaded driven object to return to its home position.

```
┌─────────────────────────────┐
│   Adjust position of setup   │
│   ultimate position Device   │
└─────────────────────────────┘
               │
               ▼
┌─────────────────────────────┐
│    Adjust Auxiliary Setup    │
│            Device            │
└─────────────────────────────┘
               │
               ▼
┌─────────────────────────────┐
│ Turn Machine ON,   Start Rotary │
│         power source         │
└─────────────────────────────┘
               │
               ▼
┌─────────────────────────────┐
│ Load driven to Auxiliary setup │
│  pisition, cut power supply to │
│            Motor             │
└─────────────────────────────┘
               │
               ▼
┌─────────────────────────────┐
│  Load positioned  according to │
│  intertial, residual buffer  │
└─────────────────────────────┘
               │
               ▼
┌─────────────────────────────┐
│       Load driven to        │
│      ultimate position      │
└─────────────────────────────┘
               │
               ▼
┌───────────────────────────────────────────────────────┐
│ Driving brake (if abailable) directly to reversely drive │
│ rotary power source; or driving brake (if available), after │
│ ended brake action, brake  reduced and reversely drive rotary │
│ power soruce                                           │
└───────────────────────────────────────────────────────┘
               │
               ▼
┌─────────────────────────────┐
│  Load return to original point, │
│         Machine stop         │
└─────────────────────────────┘
```

Table 1

FIG. 1

FIG. 2

FIG. 3

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 6, no. 20 (M-110)5 February 1982 & JP-A-56 137 971 ( RICOH CO. LTD. ) 28 October 1981 * abstract * | 1-3 | B23Q15/24 G05B19/407 |
| A | GB-A-945 049 (ETABLISSEMENTS SIRUGUE & CIE) * page 2, column 1, line 56 - column 2, line 118 * | 2-4 | |
| A | PATENT ABSTRACTS OF JAPAN vol. 4, no. 66 (P-011)17 May 1980 & JP-A-55 033 215 ( UBE IND. LTD. ) 8 March 1980 * abstract * | 1-4 | |
| A | PATENT ABSTRACTS OF JAPAN vol. 11, no. 197 (P-589)25 June 1987 & JP-A-62 019 915 ( NIPPON DENSO CO. LTD. ) 28 January  1987 * abstract * | 1-4 | |
| A | DE-A-2 701 413 (TOYOTA JIDOSHA KOGYO K.K.) * page 8 - page 10; figure 1 * | 1-4 | TECHNICAL FIELDS SEARCHED (Int. Cl.5 ) B23Q G05B |

The present search report has been drawn up for all claims

| Place of search | Date of completion of the search | Examiner |
|---|---|---|
| THE HAGUE | 15 MAY 1992 | MOYLE J.F. |